# EUROPÄISCHE PATENTSCHRIFT

(11) **EP 3 221 682 B1**
(45) Veröffentlichungstag und Bekanntmachung des Hinweises auf die Patenterteilung: **17.11.2021**
(21) Anmeldenummer: 15800766.6
(22) Anmeldetag: 20.11.2015
(51) Int. Cl.: G01N 1/22

(54) **ABGASMESSANLAGE ZUR MESSUNG VON VERBRENNUNGSABGASEN**
EXHAUST GAS MEASURING SYSTEM FOR MEASURING COMBUSTION EXHAUST GASES
INSTALLATION DE MESURE DE GAZ D'ÉCHAPPEMENT DE COMBUSTION

(30) Priorität: 21.11.2014 DE 102014223815
(43) Veröffentlichungstag der Anmeldung: 27.09.2017
(73) Patentinhaber: AIP GmbH & Co. KG, 87490 Haldenwang (DE)
(72) Erfinder: HARTMANN, Christian, 87452 Altusried (DE); KNESTEL, Anton, 87496 Hopferbach (DE)
(74) Vertreter: MERH-IP Matias Erny Reichl Hoffmann Patentanwälte PartG mbB
(86) Internationale Anmeldenummer: PCT/EP2015/077281
(87) Internationale Veröffentlichungsnummer: WO 2016/079329

(56) Entgegenhaltungen:
- EP-A1- 2 302 190
- EP-A2- 1 462 791
- DE-A1- 19 911 645
- US-A1- 2011 117 000
- US-A1- 2014 338 540

## Beschreibung

Die Erfindung betrifft eine Abgasmessanlage zur Messung von Verbrennungsabgasen, insbesondere von Kraftfahrzeugen, mittels einer Verdünnungsluftanlage, bei der das Abgas zur Absenkung des Taupunkts mit Umgebungsluft gemischt wird. Erfindungsgemäß kann eine Abgasmessanlage realisiert werden, die durch einen Blower oder eine Pumpe erzeugte Abwärme zum Aufheizen der Verdünnungsluft verwendet. Dadurch kann eine sehr energieeffiziente Abgasmessanlage realisiert werden.

Um bei einem Verbrennungsprozess, wie beispielsweise einer Brennkraftmaschine die emittierten Schadstoffmassen bestimmen zu können, ist es notwendig den Gesamtgasmassenstrom zu erfassen. Dies gestaltet sich jedoch auf Grund der hohen Temperatur und der entsprechenden Dynamik schwierig. In der Fahrzeugindustrie wird beispielsweise eine Verdünnungstechnik eingesetzt. Dabei wird entweder über eine Displacement-Pumpe ein einstellbares Gasvolumen gefördert oder gemäß einer anderen Alternative werden kritische Venturi-Rohre verwendet. Dabei wird über ein Gebläse ein Unterdruck erzeugt, damit in der Venturi-Düse ein kritisches Strömungsverhältnis vorliegt. Dadurch kann sich eine konstante Gasvolumenströmung ergeben. Derartige Anlagen werden auch kurz CVS (Constant Volume Sampler) genannt.

Stromauf eines solchen Venturi-Rohres bzw. der entsprechenden Venturi-Rohre werden die Temperatur und der Druck des Gases gemessen, dadurch kann über einen konstanten Volumenfluss durch die CVS ein entsprechender Massenstrom berechnet werden.

Grundsätzlich ist der Gesamtmassendurchsatz durch die CVS oder durch ein Displacement-Gebläse konstant. Ohne Abgas ist der Verdünnungsluftstrom gleich groß wie der Massenstrom durch die CVS. Kommt ein Abgas hinzu, wird der Verdünnungsluftstrom entsprechend kleiner, weil die Summe der beiden Gasströme gleich bleibt.

In der DE 196 17 160 C1 ist eine komplette Messanlage beschrieben. In dieser Anlage wird Verdünnungsluft über einen Filter einem sogenannten Verdünnungstunnel zugeführt. Am Eingang des Tunnels wird das Fahrzeugabgas durch eine Leitung zugeführt und in dem Tunnel möglichst homogen gemischt. An einer Messstelle wird nun ein Aerosolstrom entnommen, der durch ein Venturi proportioniert wird.

Die DE 199 83 372 B4 zeigt ebenfalls eine solche Anlage, bei der vom Hauptmassenstrom (Hauptventuri) eine kleine Probe über ein Probenventuri durchgesaugt und über eine Pumpe in einen Abgasbeutel transportiert wird. Weiterhin wird aus der Verdünnungsluft eine Probe entnommen, die in einen Verdünnungsluftbeutel eingelagert wird. Die DE 10 2010 051631 A1 beschreibt eine Abgasmessanlage, die das Ziel erreichen soll, die Messgenauigkeit in Bezug auf die Konzentration von N2O in Messobjektgas zu verbessern, und zwar durch Entfernen von N2O in der Verdünnungsluft und durch Absenken des Verhältnisses der Konzentration von N2O in der Verdünnungsluft zur Konzentration von N2O im Messobjektgas, welches mit der Verdünnungsluft so weit wie möglich verdünnt wurde. Ferner beschreibt die EP 1 462 791 A2 ein Emissionsprobennahmesystem, das eine Abgassonde zur Entnahme von Abgasproben umfasst. Eine Verdünnungsgasquelle liefert ein Verdünnungsgas, und eine Mischvorrichtung steht mit der Abgassonde und der Verdünnungsgasquelle in Fluidverbindung, um die entnommene Abgasprobe und das Verdünnungsgas zu mischen, um ein verdünntes Abgas zu bilden. Mit der Mischvorrichtung steht, stromabwärts von dieser, ein Partikelfilter in Fluidverbindung. Zwischen der Verdünnungsgasquelle und der Mischvorrichtung ist eine Temperiervorrichtung für die Verdünnungstemperatur angeordnet, um eine gewünschte Verdünnungsgastemperatur zu erzielen.

Bei den vorgenannten Anlagen des Stands der Technik werden Vakuumgebläse benutzt um einen Unterdruck zu erzeugen, so dass die Venturirohre in einem kritischen Zustand betrieben werden können. Der überwiegende Anteil der den Antriebsrotoren zugeführten Energie wird jedoch in Wärme umgewandelt, die ungenutzt in die Umgebung abgegeben wird.

Eine Aufgabe der Erfindung ist es, eine Abgassmessanlage zur Messung von Verbrennungsabgasen, insbesondere von Kraftfahrzeugen zu schaffen, die eine hohe Energieeffizienz aufweist.

Erfindungsgemäß weist die Abgasmessanlage zur Messung von Verbrennungsabgasen, insbesondere von Kraftfahrzeugen mittels einer Verdünnungsluftanlage, bei der das Abgas zur Absenkung des Taupunkts mit Umgebungsluft gemischt wird, einen Wärmetauscher auf, der Abwärme des stromab eines Gasfördermittels strömenden Gasgemisches der Verdünnungsluft zum Vorheizen zuführt.

Dadurch ist es möglich eine stark energieoptimierte Anlage zu betreiben, da die in den Luftstrom abgegebene Abwärme des Gasfördermittels (beispielsweise eine Pumpe oder ein Blower) verwendet werden kann um die in das System einströmende Verdünnungsluft aufzuwärmen. In gleicher Weise kann anderweitig in den Luftstrom eingebrachte Wärmeenergie (beispielsweise Fahrzeug-Abwärme, anderweitige Heizleistung, z.B. durch beheizte Schläuche, Leitungen, Tunnel, Verdünnungslufterhitzer) verwendet werden. Dadurch können die Betriebskosten der Anlage deutlich gesenkt werden und zudem kann eine umweltfreundlichere Anlage realisiert werden.

Weiterhin kann die Abgasmessanlage zur Erhöhung der Regelgeschwindigkeit eine Stellklappe aufweisen, die der durch das Gasfördermittel und/oder durch heißen Abgaseintrag erwärmten Luft Frischluft zuführen kann. Dadurch können eventuelle Temperaturschwankungen an einer Messstelle minimiert werden, wodurch die Messgenauigkeit der Anlage weiter erhöht werden kann.

Weiterhin kann die Verdünnungsluft beim Starten der Anlage über einen Heizer vorgeheizt werden. Folglich ist sichergestellt, dass auch beim Beginn des Anlagenbetriebs eine ausreichende Wärme zur Verfügung steht um eine genaue und normgerechte Messung durchzuführen.

Bei Verbrennungsmotoren enthält das Verbrennungsabgas 80 - 100 Gramm Wasser pro Kubikmeter Abgas. Dies entspricht einer Taupunkttemperatur zwischen 48 und 55°C. Bei Fahrzeugen, die mit Gas betrieben werden, können auch Wassermengen von 130 Gramm pro Kubikmeter und Taupunkttemperaturen über 60°C vorkommen. Bei den beschriebenen CVS-Anlagen muss unter allen Umständen verhindert werden, dass irgendwelche gasförmigen Komponenten - insbesondere Wasser - kondensieren. Diese Kondensation würde die Messung verfälschen und daher unbrauchbar machen.

Es ist hierbei sinnvoll, dass das in den Beuteln gesammelte Abgas eine CO₂-Konzentration von 3% bei Benzin und Diesel nicht übersteigt. Das bedeutet, dass die Abgasmenge mit der ca. 5-fachen Luftmenge gemischt werden muss, um sicher zu stellen, dass keine Kondensation stattfindet. Die Temperatur wird dabei in der Regel auf beispielsweise 35 °C konstant gehalten (CVS+Probe+Beutel).

Bei LPG liegt diese Konzentration beispielsweise bei 2,2% und bei Biomethan oder NG beispielsweise bei 1,5%.

Dies bedeutet, dass bei größeren Abgasmengen ein entsprechend hoher Verdünnungsluftvolumenstrom bereit gestellt werden muss. Wenn man den Wassergehalt in Gramm pro Kubikmeter über der Temperatur betrachtet, wird ersichtlich, dass der Taupunkt bei höheren Temperaturen exponentiell steigt. Dadurch würde weniger Verdünnungsluft notwendig. Dann muss allerdings die Verdünnungsluft entsprechend temperiert werden.

Folglich besteht der Zwiespalt zwischen entweder einem sehr großen, nicht beheiztem Verdünnungsluftstrom und einem niedrigen, jedoch energieintensiv beheiztem Verdünnungsluftstrom.

Erfindungsgemäß wird durch den Einsatz des Wärmetauschers zum Nutzen der Abwärme des stromab des Gasfördermittels strömenden Gasgemisches zum Vorheizen der Verdünnungsluft, eine sehr energieeffiziente Anlage realisiert, bei der eine Optimum zwischen der einzusetzenden Energie zum Aufheizen der Verdünnungsluft und dem notwendigen Volumenstrom erzielt wird. Dadurch kann eine zugleich kostengünstige und energieeffiziente und damit umweltschonende Anlage realisiert werden.

Die erfindungsgemäße Vorrichtung wird im Folgenden exemplarisch mit Bezug auf die beigefügten, schematischen Zeichnungen näher erläutert.

Es zeigen:
- Figur 1: eine erfindungsgemäße Abgasmessanlage und
- Figur 2: eine erfindungsgemäße Abgasmessanlage mit einem vorgelagerten Mischpunkt.

Im Folgenden werden verschiedene Beispiele detailliert und unter Bezugnahme auf die Figuren beschrieben. Gleiche bzw. ähnliche Elemente in den Figuren werden mit gleichen Bezugszeichen bezeichnet. Die vorliegenden Vorrichtungen sind jedoch nicht auf die beschriebenen Kombinationen von Merkmalen begrenzt. Vielmehr sollen auch weitere Modifikationen und Kombinationen von der Offenbarung und dem unabhängigen Anspruch umfasst sein.

Die Pfeile in den Figuren kennzeichnen die jeweiligen Strömungsrichtungen.

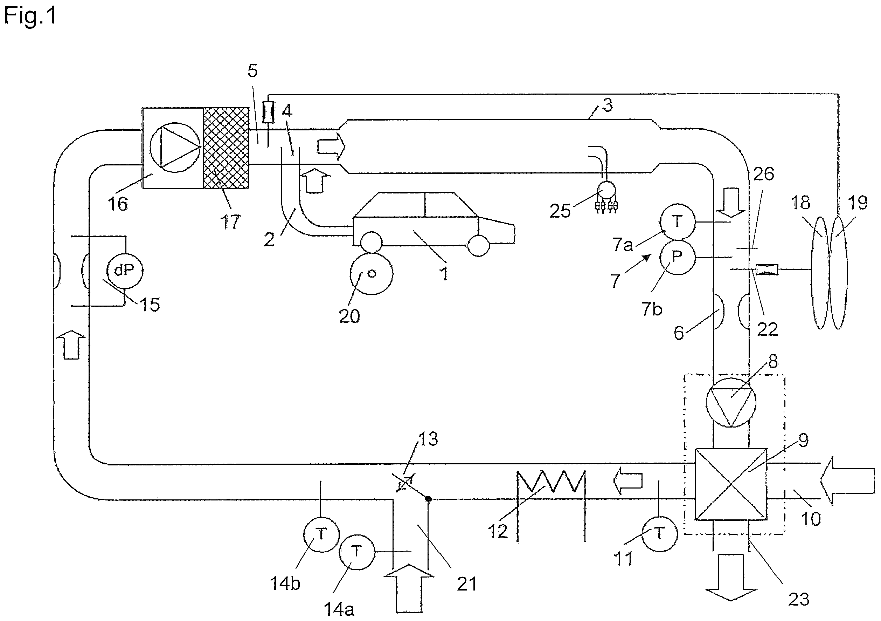

In der Figur 1 ist eine Abgasmessanlage zur Messung von Verbrennungsabgasen von einem Kraftfahrzeug 1 dargestellt. Die im Betrieb des Kraftfahrzeugs 1 entstehenden Abgase werden über ein Abgasrohr 2 in einen Verdünnungstunnel 3 geleitet. Stromab des Verdünnungstunnels 3 wird, wie später noch detailliert beschrieben, an einer Probenentnahmestelle 22 eine Abgasprobe entnommen. Diese Abgasprobe wird einem oder mehreren Abgasbeuteln 18 zugeführt und dort gesammelt. Weiterhin wird stromauf des Abgasrohrs 2 aus der Verdünnungsluft 5 eine Probe entnommen und einem Verdünnungsluftbeutel 19 zugeführt. Aus der im Abgasbeutel 18 befindlichen Probe, korrigiert durch die Zusammensetzung des Gases aus dem Verdünnungsluftbeutel 19, kann über entsprechende Analysatoren die Zusammensetzung des Abgases ermittelt werden. Die Angabe erfolgt in der Regel in Volumenprozent bzw. ppm oder ppb. Aus dieser Konzentration kann mit dem bekannten Hauptmassenstromdurchsatz die Schadstoffmasse ermittelt werden.

Zusätzlich zur Probenentnahmestelle 22 kann eine Modalmessentnahmestelle 26 vorgesehen sein. Im Gegensatz zur Einleitung der Abgase in den Abgasbeutel 18 und der anschließenden Auswertung wird bei der Modalmessung über die Modalmessentnahmestelle 26 eine kontinuierliche Messung über den gesamten Zyklus durchgeführt. Dadurch ist eine zeitliche Auflösung der Messung über die erfassten IstWerte möglich.

Durch den Einsatz eines Rollenprüfstands 20 kann der ermittelte Massendurchsatz auf die Fahrstrecke, die über den Rollenprüfstand realisiert wird, bezogen werden und es ist möglich die vom Gesetzgeber gewünschte Masse an Schadstoffbelastung in Gramm/Kilometer, Gramm/Meilen oder Gramm/Kilowattstunde bei Heavy-Duty-Anlagen zu ermitteln.

Es ist vorteilhaft, wenn es möglich ist das Abgas-/Luftgemisch an einer Venturidüse 6 auf einer bestimmten Temperatur konstant zu halten. Dadurch kann der Wärmeaustauscher und ein beispielsweise elektrischer Heizer 12 eine entsprechend kürze Ansprechzeit haben. Um Temperatursprünge, verursacht beispielsweise durch einen heißen Abgaseintrag zu verhindern, ist eine Regelklappe 13 vorgesehen, die in der Lage ist bei Bedarf zusätzlich Verdünnungsluft 5 einzubringen, sofern notwendig. Die Temperatur der an der Regelklappe 13 einströmenden Frischluft 21 wird über einen Sensor 14a überwacht. Die Temperatur der sich dann ergebenen Mischluft stromab der Regelklappe 13 wird durch einen Temperatursensor 14b überwacht. Mittels dieser Temperaturwerte kann eine Klappenregelung der Regelklappe 13 optimiert werden.

Das über das Abgasrohr 2 emittierte Abgas wird an einer Mischstelle 4 in den Verdünnungstunnel 3 geleitet. An der Mischstelle 4 wird das Abgas mit gefilterter Verdünnungsluft 5 gemischt. In dem Verdünnungstunnel 5 ist eine Partikelentnahmestelle 25 vorgesehen. Die Temperatur an der Oberfläche von Filtern an der Partikelentnahmestelle 25 kann beispielsweise 47 - 52°C betragen. Das Abgas-/Luftgemisch wird über die kritische Venturidüse 6 gesaugt und es wird über die beiden Sensoren 7a, 7b eine Druck- und Temperaturmessung zur Ermittlung des Massendurchsatzes durchgeführt. Der Sensor 7a ist ein weiterer Temperatursensor.

Das beispielsweise als Blower ausgeführte Gasfördermittel 8 erzeugt den für das Venturirohr 6 erforderlichen Unterdruck. Die beispielsweise durch den Blower oder die Pumpen erwärmte Abluft wird in einen Wärmetauscher 9 geführt. Die abgekühlte Luft wird beispielsweise über einen Kamin 23 entsorgt. Auf der anderen Seite des Wärmetauschers 9 wird Umgebungsluft 10 angesaugt und dann im Wärmetauscher 9 erwärmt. Am Ausgang des Wärmetauschers 9 sind eine Temperaturmessstelle 11 sowie ein zusätzlicher Heizer 12 vorgesehen. Über die Regelklappe 13 wird die Temperatur an der Messstelle 7 derart geregelt, dass hier eine bestimmte Temperatur - vorzugsweise zwischen 35 °C und 55 °C unabhängig von den eingebrachten Abgasströmen - konstant gehalten wird.

Weiterhin kann ein Durchflussmessgerät 15 stromab der Regelklappe 13 und stromauf der Messstelle 4 vorgesehen sein. Dieses Durchflussmessgerät 15 kann ebenfalls zur Optimierung der Regelstrecke eingesetzt werden, weil durch einen stromab angeordneten Filter 17 ein entsprechender Druckverlust auftreten kann, so dass eventuell ein gewünschtes Druckgleichgewicht an der Entnahmestelle am Fahrzeug überschritten werden könnte. Dies dient zur Vermeidung von Unterdruck an der Entnahmestelle. Optional kann ein weiteres Gasfördermittel 16 stromab vom Durchflussmessgerät 15 und stromauf der Mischstelle 4 vorgesehen sein. Dieses weitere Gasfördermittel 16 kann beispielsweise ein Blower sein.

Wie schon voranstehend ausgeführt, wird vor der Venturidüse 6 an der Probenentnahmenstelle 22 eine Probe entnommen, die in einem oder mehreren Abgasbeuteln 18 gesammelt wird oder werden. Ebenso wird die Verdünnungsluft 5 in dem Verdünnungsluftbeutel 19 gesammelt. Die Inhalte der Beutel werden dann einer Auswertung zugeführt.

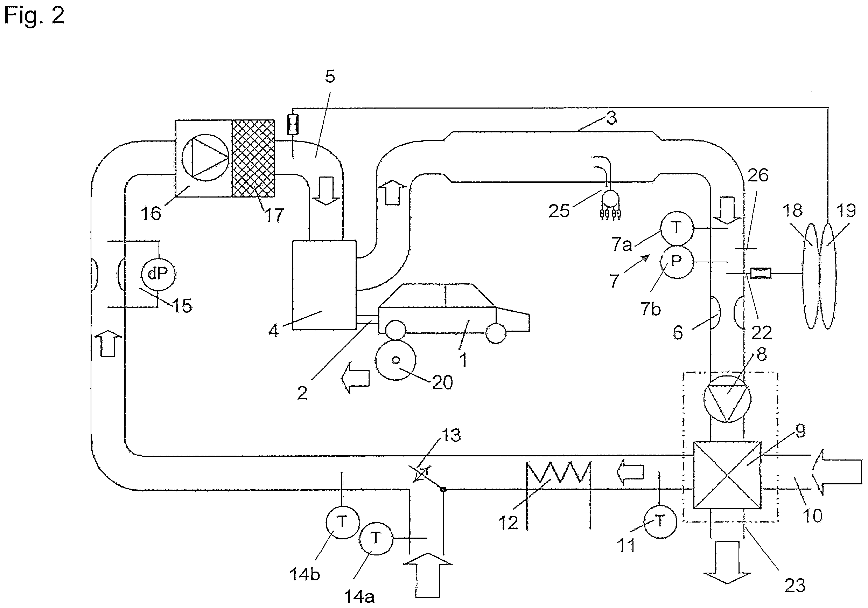

In der Figur 2 ist im Unterschied zur Figur 1 ein sogenannter vorgelagerter Mischpunkt vorgesehen wobei in diesem vorgelagerten Mischpunkt die Mischstelle 4 realisiert wird.

Wie voranstehend erläutert kann die Erfindung eine sehr energieeffiziente Abgasmessanlage realisieren, da die durch die Gasfördermittel und das Abgas erzeugte Wärme verwendet werden kann um die angesaugt Verdünnungsluft vorzuheizen. Weiterhin kann erfindungsgemäß durch die vorgesehenen Regelmöglichkeiten (beispielsweise durch die Regelklappe 13) sichergestellt werden, dass der Wärmeaustauscher und damit des Einstellen der gewünschten Temperatur an der Messstelle 7 eine kurze Ansprechzeit haben, so dass Temperatursprünge verhindert werden können, was wiederum zu einer verbesserten Messgenauigkeit führt.

## Patentansprüche

1. Abgasmessanlage zur Messung von Verbrennungsabgasen von Kraftfahrzeugen (1) mittels einer Verdünnungsluftanlage, bei der Abgas zur Absenkung des Taupunkts mit Verdünnungsluft (10) zu einem Gasgemisch gemischt wird, umfassend ein das Gasgemisch förderndes Gasfördermittel, **gekennzeichnet dadurch, dass** ein Wärmetauscher (9) vorgesehen ist, der stromab von dem das Gasgemisch fördernden Gasfördermittel (8) angeordnet ist und dazu eingerichtet ist, Abwärme des stromab des Gasfördermittels (8) strömenden Gasgemisches der Verdünnungsluft (10) zum Vorheizen zuzuführen.

2. Abgasmessanlage nach Anspruch 1, **dadurch gekennzeichnet, dass** zur Erhöhung einer Regelgeschwindigkeit eine Stellklappe (13) vorgesehen ist, die dazu eingerichtet ist, der durch das Gasfördermittel (8) und/oder durch die Abwärme des Gasgemisches erwärmten Verdünnungsluft (10) Frischluft (21) zuzuführen, zur Minimierung von Temperaturschwankungen an einer Messstelle (7).

3. Abgasmessanlage nach Anspruch 1 oder 2, **dadurch gekennzeichnet, dass** ein Heizer (12) vorgesehen ist, der dazu geeignet ist, die Verdünnungsluft (10), die Raumluft aus der Umgebung entnommen wird, vorzuheizen.

4. Abgasmessanlage nach zumindest einem der Ansprüche 1 - 3, **dadurch gekennzeichnet, dass** der Wärmetauscher (9) ein Kreuzstromwärmetauscher ist, der zur Energierückgewinnung aus der Abluft des Gasfördermittels (8) verwendbar ist.

5. Abgasmessanlage nach zumindest einem der Ansprüche 1 - 3, **dadurch gekennzeichnet, dass** der Wärmetauscher (9) ein Plattenwärmetauscher ist, der zur Energierückgewinnung aus der Abluft des Gasfördermittels (8) verwendbar ist.

6. Abgasmessanlage nach zumindest einem der Ansprüche 1 - 3, **dadurch gekennzeichnet, dass** die Abgasmessanlage dazu eingerichtet ist, die Energierückgewinnung aus der Abluft des Gasfördermittels (8) über ein Rotationssystem durchzuführen.

7. Abgasmessanlage nach zumindest einem der Ansprüche 2 oder 3 bis 6 wenn abhängig von Anspruch 2, **dadurch gekennzeichnet, dass** die Temperatur an der Messstelle (7) mit Hilfe der Stellklappe (13) auf einen im Wesentlichen konstanten Wert zwischen 35 °C und 55°C einstellbar ist.

8. Abgasmessanlage nach zumindest einem der Ansprüche 1 - 7, **dadurch gekennzeichnet, dass** die Abgasmessanlage dazu eingerichtet ist, die Temperatur an der Messstelle (7) auf einem im Wesentlichen konstanten Wert zu halten, der zwischen 35 °C und 55°C einstellbar ist.

9. Abgasmessanlage nach zumindest einem der Ansprüche 1 - 8, **dadurch gekennzeichnet, dass** stromauf einer Venturidüse (6) an einer Probenentnahmestelle (22) eine Probe entnehmbar ist und einem Abgasbeutel (18) zuführbar ist.

10. Abgasmessanlage nach zumindest einem der Ansprüche 1 - 9, **dadurch gekennzeichnet, dass** das Gasfördermittel (8) eine Pumpe oder ein Blower ist.

## Claims

1. An exhaust gas measuring system for measuring combustion exhaust gases of motor vehicles (1) by means of a dilution air system in which the exhaust gas is mixed with diluted air (10) for lowering of the dew point, said exhaust gas measuring system comprising a gas conveying means conveying the gas mixture, **characterized in that** a heat exchanger (9) is provided downstream of said gas conveying means (8) conveying the gas mixture and is configured to supply waste heat of the gas mixture flowing downstream of said gas conveying means (8) to the dilution air (10) for preheating.

2. The exhaust gas measuring system according to claim 1, **characterized in that**, in order to increase the control rate, a control flap (13) is provided which supplies fresh air (21) to the diluted air (10) heated by said gas conveying means (8) and/or by the waste heat of the gas mixture in order to minimize temperature fluctuations at a measuring point (7).

3. The exhaust gas measuring system according to claim 1 or 2, **characterized in that** a heater (12) is provided which is configured to preheat the dilution air (10) taken from the ambient room air.

4. The exhaust gas measuring system according to at least one of the claims 1-3, **characterized in that** said heat exchanger (8) is a cross-flow heat exchanger usable to recover energy from the exhaust air of said gas conveying means (8).

5. The exhaust gas measuring system according to at least one of the claims 1-3, **characterized in that** said heat exchanger (8) is a plate heat exchanger usable to recover energy from the exhaust air of said gas conveying means (8).

6. The exhaust gas measuring system according to at least one of the claims 1 - 3, **characterized in that** said exhaust gas measuring system is configured to carry out the energy recovery from the exhaust air of said gas delivery means (8) via a rotation system.

7. The exhaust gas measuring system according to at least one of the claims 2 or 3 to 6 when dependent on claim 2, **characterized in that** the temperature at said measuring point (7) can be set to a substantially constant value between 35 °C and 55 °C using said control flap (13).

8. The exhaust gas measuring system according to at least one of the claims 1-7, **characterized in that** said exhaust gas measuring system is configured to keep the temperature at said measuring point (7) at a substantially constant value adjustable between 35 °C and 55 °C

9. The exhaust gas measuring system according to at least one of the claims 1-8, **characterized in that** a sample can be taken upstream of a Venturi nozzle (6) at a sampling point (22) and can be fed to an exhaust gas bag (18).

10. The exhaust gas measuring system according to at least one of the claims 1-9, **characterized in that** said gas conveying means (8) is a pump or a blower.

## Revendications

1. Installation de mesure de gaz d'échappement destinée à mesurer des gaz d'échappement de combustion de véhicules automobiles (1) au moyen d'une installation d'air de dilution, dans laquelle le gaz d'échappement est mélangé avec de l'air de dilution (10) donnant un mélange gazeux pour abaisser le point de rosée, comprenant un moyen d'acheminement de gaz acheminant le mélange gazeux, **caractérisée en ce que** il est prévu un échangeur de chaleur (9) qui est agencé en aval du moyen d'acheminement de gaz (8) acheminant le mélange gazeux et qui est configuré pour alimenter la chaleur dégagée du mélange gazeux, s'écoulant en aval du moyen d'acheminement de gaz (8), à l'air de dilution (10) pour un préchauffage.

2. Installation de mesure de gaz d'échappement selon la revendication 1, **caractérisée en ce que**, pour augmenter une vitesse de régulation, il est prévu un clapet de régulation (13) qui est configuré pour alimenter de l'air neuf (21) à l'air de dilution (10) réchauffé par le moyen d'acheminement de gaz (8) et/ou par la chaleur dégagée du mélange gazeux, afin de minimiser les variations de température au niveau d'un point de mesure (7).

3. Installation de mesure de gaz d'échappement selon la revendication 1 ou 2, **caractérisée en ce qu'**il est prévu un chauffage (12) qui est adapté pour préchauffer l'air de dilution (10) qui est prélevé de l'air ambiant provenant de l'environnement.

4. Installation de mesure de gaz d'échappement selon l'une au moins des revendications 1 à 3, **caractérisée en ce que** l'échangeur de chaleur (9) est un échangeur de chaleur à flux croisés qui peut être utilisé pour récupérer de l'énergie à partir de l'air dégagé du moyen d'acheminement de gaz (8).

5. Installation de mesure de gaz d'échappement selon l'une au moins des revendications 1 à 3, **caractérisée en ce que** l'échangeur de chaleur (9) est un échangeur de chaleur à plaques qui peut être utilisé pour récupérer de l'énergie à partir de l'air dégagé du moyen d'acheminement de gaz (8).

6. Installation de mesure de gaz d'échappement selon l'une au moins des revendications 1 à 3, **caractérisée en ce que** l'installation de mesure de gaz d'échappement est configurée pour faire passer la récupération d'énergie À partir de l'air dégagé du moyen d'acheminement de gaz (8) via un système de rotation.

7. Installation de mesure de gaz d'échappement selon l'une au moins des revendications 2 ou 3 à 6 en dépendance de la revendication 2, **caractérisée en ce que** la température au niveau du point de mesure (7) peut être réglée à l'aide du clapet de régulation (13) à une valeur sensiblement constante entre 35 °C et 55 °C.

8. Installation de mesure de gaz d'échappement selon l'une au moins des revendications 1 à 7, **caractérisée en ce que** l'installation de mesure de gaz d'échappement est configurée pour maintenir la température au niveau du point de mesure (7) à une valeur sensiblement constante qui peut être réglée entre 35 °C et 55 °C.

9. Installation de mesure de gaz d'échappement selon l'une au moins des revendications 1 à 8, **caractérisée en ce qu'**un échantillon peut être prélevé en amont d'une buse de Venturi (6) au niveau d'un point de prélèvement d'échantillon (22) et peut-être alimenté à une poche de gaz d'échappement (18).

10. Installation de mesure de gaz d'échappement selon l'une au moins des revendications 1 à 9, **caractérisée en ce que** le moyen d'acheminement de gaz (8) est une pompe ou une soufflante.
